(19) Europäisches Patentamt / European Patent Office / Office européen des brevets

(11) **EP 3 686 159 A1**

(12) **EUROPEAN PATENT APPLICATION**

(43) Date of publication:
**29.07.2020 Bulletin 2020/31**

(51) Int Cl.:
*C01G 51/04* *(2006.01)*

(21) Application number: **20152221.6**

(22) Date of filing: **16.01.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.01.2019 CN 201910039655**

(71) Applicant: **Ningde Amperex Technology Limited Ningde City, Fujian Province 352100 (CN)**

(72) Inventors:
- **CHEN, Pengwei**
  **Ningde City,, Fujian Province, 352100 (CN)**
- **WANG, Meng**
  **Ningde City,, Fujian Province, 352100 (CN)**
- **XU, Leimin**
  **Ningde City,, Fujian Province, 352100 (CN)**
- **WANG, Liang**
  **Ningde City,, Fujian Province, 352100 (CN)**

(74) Representative: **Klunker IP Patentanwälte PartG mbB Destouchesstraße 68 80796 München (DE)**

(54) **PRECURSOR OF LITHIUM COBALT OXIDE AND PREPARATION METHOD THEREOF AND COMPOSITE OF LITHIUM COBALT OXIDE PREPARED FROM THE PRECURSOR OF LITHIUM COBALT OXIDE**

(57) The present application relates to a precursor of lithium cobalt oxide and preparation method thereof and a composite of lithium cobalt oxide prepared from the precursor of the lithium cobalt oxide. Specifically, the present application relates to the precursor of lithium cobalt oxide having a surface coating structure obtained by performing surface coating on the precursor of the lithium cobalt oxide with a metal oxide, and synthesizing a cathode material of the composite of the lithium cobalt oxide used by an electrochemical device using such precursor. The cathode material of the composite of the lithium cobalt oxide synthesized by such a precursor and the electrochemical device containing such cathode material have better structural stability, better cycle stability and better storage and safety performances during high voltage.

Electronic image 1  Mn Ka1  Ni Ka1

FIG. 2

**Description**

**CROSS REFERENCE TO RELATED APPLICATIONS**

The present application claims the benefit of priority from the China Patent Application No. 201910039655.2, filed on 16 January 2019, the disclosure of which is hereby incorporated by reference in its entirety.

**BACKGROUND**

**1. Technical Field**

The present application relates to a precursor of lithium cobalt oxide and a preparation method thereof. The present application further relates to a cathode material of lithium cobalt oxide prepared from the aforementioned precursor and an electrochemical device prepared by adopting the cathode material of lithium cobalt oxide.

**2. Description of the Related Art**

With the popularity of electronic products, such as notebook computers, mobile phones, handheld game consoles, and tablet computers, the requirements for electrochemical devices (for example, batteries) are ever more stringent. Among the numerous types of batteries, lithium ion batteries have the advantages of high energy storage density, high power density, good safety, environmental friendliness, long service life, low self-discharge rate, and a wide temperature adaptation range compared with lead-acid batteries, nickel-cadmium batteries, and nickel-hydrogen batteries. As important components of lithium ion batteries, cathode materials have had a significant impact on the performance of lithium ion batteries. Therefore, the continuous optimization and improvement of the cathode materials are particularly important.

**SUMMARY**

As electronic products are upgraded, the pursuit for higher energy density has become an important development trend for the cathode materials in lithium ion batteries. As a commercial lithium ion cathode material, lithium cobalt oxide has the best comprehensive performance in terms of reversibility, discharging capacity, charging efficiency, and voltage stability. Lithium cobalt oxide continues to hold the dominant position among the cathode materials in consumer lithium ion batteries due to its relatively high discharge voltage platform and its relatively high energy density.

Unlike conventional cathode materials, such as lithium-containing nickel-cobalt-manganese oxides, lithium-containing nickel-cobalt-aluminum oxides, and lithium manganate, when the lithium-ion battery with lithium cobalt oxide as a cathode is subjected to Interval Cycle testing, lithium cobalt oxide encounters problems of particle breakage and surface spinel phase change at a high potential due to the long-term storage and cycling of the cathode at a high voltage ($\geq$4.45 V). Due to the existence of an electrochemical potential between the cathode and the electrolyte at the high potential, the interfacial potential difference needs to be compensated. Therefore, an unoccupied charge layer is formed on the surface of the cathode, so that electrons are transferred from the electrolyte to the cathode, and form a structurally destroyed unoccupied charge layer on the surface of the cathode wetted by the electrolyte, and the phase change of the surface structure of the lithium cobalt oxide is caused, which is also an important reason for the difference between the failures of the lithium cobalt oxide and other cathode materials. In other words, when the lithium cobalt oxide material works at a high voltage condition, the structural stability and electrochemical stability are relatively poor, which can significantly reduce the electrochemical performance and safety performance of the battery, and the use demands by people on the lithium-ion batteries are difficult to meet.

In order to improve cycle stability and the safety performance of lithium cobalt oxide at the high voltage, the structural and electrochemical properties of lithium cobalt oxide particles can be optimized by surface coating. By coating a thin and stable barrier on the surface of the material, the material is separated from the electrolyte while the contact resistance between the particles is reduced, so as to prevent corrosion of the cathode material by HF gas decomposed from the electrolyte. Simultaneously, the electronic conductivity between the particles and the lithium ion diffusion coefficient is increased, the polarization problem of battery reaction is reduced, the structural stability and thermal stability of the cathode material are improved, and the safety performance and service life of the lithium cobalt oxide material are optimized.

In the prior art, the coating is mainly performed after the synthesis of the lithium cobalt oxide, and the binding effect between the coating layer and the lithium cobalt oxide is affected by materials of the lithium cobalt oxide and the coating layer. Although part of the materials of the coating layer have obvious improvement on the electrical properties of the lithium cobalt oxide material, the "adhesion" to the lithium cobalt oxide is relatively poor, and the coating layer is difficult to coat or is peeled off during the slurry stirring of the lithium cobalt oxide, thereby seriously limiting the coating effect. In addition, when a plurality of elements need to be adopted for coating at the same time, selective coating may also occur, that is, the coating layer is unevenly distributed on the surface of the lithium cobalt oxide particles.

In order to solve the above problems, according to the present application, the coating process is adopted during the synthesis of the precursor of the lithium cobalt oxide. According to the present application, a metal oxide or a metal salt (for example, nitrate, acetate, etc.) is added during the synthesis of the precursor of lithium cobalt oxide to obtain a precursor of lithium cobalt oxide having a metal oxide coating layer on the surface.

According to a first aspect of the present application, the present application provides a precursor of lithium cobalt oxide, comprising a substrate material and a coating layer, wherein the general formula of the substrate material is represented as $CoO_x(OH)_y(CO_3)_z$, wherein the coating layer is located on the surface of the substrate material, the coating layer contains a metal oxide, and the general formula of the metal oxide is represented as $MO_n$, wherein $0<x<1.5$, $0 \leq y<2$, $0<z<1$, $0<n<2.5$.

In some embodiments, the mass fraction of the metal oxide is about 0.01% to about 5% based on the total mass of the precursor of lithium cobalt oxide.

In some embodiments, the mass fraction of the metal oxide is about 0.5% to about 4%.

In some embodiments, the mass fraction of the metal oxide is about 1% to about 3%.

In some embodiments, the mass fraction of the metal oxide is about 2%.

In some embodiments, M comprises at least one selected from the group consisting of Al, Mg, Ti, Zr, Ni, Mn, Y, Nb, La, V, Zn, Mo, Ru, Ta, W, Re, Sn, Ge or Ga.

In some embodiments, M comprises at least one selected from the group consisting of Ti, Zr, Ni, Mn, Y, La, Zn, Ru or Ge.

In some embodiments, M comprises at least one selected from the group consisting of Ti, Zr, Ni, Mn, Y or La.

In some embodiments, $MO_n$ comprises at least one selected from the group consisting of $NiO$, $MnO_2$, $TiO_2$, $La_2O_3$, $Y_2O_3$ or $ZrO_2$.

In some embodiments, the thickness of the coating layer is about 50 nm to about 1 $\mu$m.

In some embodiments, the thickness of the coating layer is about 100 nm to about 800 nm.

In some embodiments, the thickness of the coating layer is about 200 nm to about 600 nm.

In some embodiments, the substrate material comprises at least one selected from the group consisting of cobaltous oxide, cobaltic oxide, cobaltosic oxide, cobaltous hydroxide, cobalt oxyhydroxide, or cobalt carbonate.

In some embodiments, the particle diameter of the metal oxide is about 10 nm to about 120 nm.

In some embodiments, the particle diameter of the metal oxide is about 50 nm to about 100 nm.

In some embodiments, the median diameter (Dv50) of the precursor of lithium cobalt oxide is about 5 $\mu$m to about 50 $\mu$m.

In some embodiments, the median diameter (Dv50) of the precursor of lithium cobalt oxide is about 10 $\mu$m to about 25 $\mu$m.

According to a second aspect of the present application, the present application provides a method for preparing a precursor of lithium cobalt oxide, comprising the steps of: mixing and then grinding a substrate material, a metal oxide or a metal salt, and a liquid organic solvent; and sintering the ground product in an air atmosphere to obtain a precursor of lithium cobalt oxide having a coating layer of the metal oxide on the surface.

In some embodiments, in the grinding step, the grinding time is about 4 hours to about 12 hours.

In some embodiments, in the grinding step, the grinding time is about 6 hours to about 10 hours.

In some embodiments, in the grinding step, the grinding speed is about 80 rpm to about 120 rpm.

In some embodiments, in the sintering step, the sintering temperature is about 400°C to about 800°C.

In some embodiments, in the sintering step, the sintering time is about 4 hours to 10 hours.

In some embodiments, in the sintering step, the sintering time is about 6 hours to about 8 hours.

In some embodiments, the substrate material comprises at least one selected from the group consisting of cobaltous oxide, cobaltic oxide, cobaltosic oxide, cobaltous hydroxide, cobalt oxyhydroxide, or cobalt carbonate.

In some embodiments, a metal element in the metal oxide or the metal salt comprises at least one selected from the group consisting of Al, Mg, Ti, Zr, Ni, Mn, Y, Nb, La, V, Zn, Mo, Ru, Ta, W, Re, Sn, Ge or Ga.

In some embodiments, $MO_n$ comprises at least one selected from the group consisting of $NiO$, $MnO_2$, $TiO_2$, $La_2O_3$, $Y_2O_3$ or $ZrO_2$.

In some embodiments, the liquid organic solvent comprises at least one selected from the group consisting of alcohol, acetone, ethylene glycol, polyethylene glycol, triethylene glycol or ethyl acetate.

According to a third aspect, the present application provides a composite of lithium cobalt oxide prepared from the above precursor of lithium cobalt oxide.

In some embodiments, the median diameter (Dv50) of the composite of lithium cobalt oxide is about 7 $\mu$m to about 50 $\mu$m.

In some embodiments, the median diameter (Dv50) of the composite of lithium cobalt oxide is about 15 $\mu$m to

about 40 $\mu$m.

In some embodiments, the median diameter (Dv50) of the composite of lithium cobalt oxide is about 20 $\mu$m to about 30 $\mu$m.

In some embodiments, an interface solid solution structure is formed on the contact interface between the metal oxide and the substrate material.

According to a fourth aspect of the present application, the present application further provides an electrochemical device, comprising a cathode, an anode, an separator, and an electrolyte, wherein the cathode comprises the above composite of lithium cobalt oxide.

In some embodiments, a compaction density of the cathode is about 4.25 g/cm$^3$ to about 4.35 g/cm$^3$.

In some embodiments, the electrolyte comprises at least one selected from the group consisting of ethylene carbonate, propylene carbonate, diethyl carbonate, dimethyl carbonate, ethyl methyl carbonate, propylene carbonate, methyl acetate or ethyl propionate.

In some embodiments, the electrolyte comprises an electrolyte lithium salt, and the electrolyte lithium salt is at least one selected from the group consisting of lithium hexafluorophosphate, lithium perchlorate, lithium hexafluoroarsenate, lithium tetrafluoroborate, trimethyllithium, or lithium chloride.

In some embodiments, the anode material comprises at least one selected from the group consisting of soft carbon, hard carbon, artificial graphite, natural graphite, silicon, a silicon-oxygen compound, a silicon-carbon compound, lithium titanate, and metals capable of forming alloys with lithium, all the anode material are capable of intercalating or deintercalating lithium ions.

Additional aspects and advantages of the embodiments of the present application will be described and shown in part in the following explanation or set forth by implementation of the embodiments of the present application.

## BRIEF DESCRIPTION OF THE DRAWINGS

The drawings show certain embodiments of the present application and are used to further understand the technical subject matter of the present application together with the above description. However, the scope of protection claimed by the present application is not limited to the drawings.

FIG. 1 is a scanning electron microscope (SEM) image and an element distribution diagram of a precursor of lithium cobalt oxide obtained in Embodiment 4 of the present application.

FIG. 2 is a scanning electron microscope (SEM) image and an element distribution diagram of a composite of lithium cobalt oxide obtained in Embodiment 4 of the present application.

FIG. 3 is a scanning electron microscope (SEM) image of the composite of lithium cobalt oxide obtained in Embodiment 4 of the present application.

## DETAILED DESCRIPTION

Hereinafter, the present application will be described in detail. It should be understood that the terms used in the specification and the appended claims should be explained according to the meanings and concepts corresponding to the technical aspects of the present application based on the principle that the inventors are allowed for optimal explanation with properly defined terms, rather than being limited to the general meanings and the meanings of the dictionary. Therefore, the descriptions in the embodiments and the accompanying drawings in the specification are only specific instances for the purpose of illustration, without intending to show all technical aspects of the present application, and it should be understood that multiple optional equivalents and variants can be made to the present application when the present application is submitted.

As used herein, the terms "substantially", "generally", "essentially" and "about" are used to describe and explain small variations. When used in connection with an event or circumstance, the terms may refer to an example in which the event or circumstance occurs precisely and an example in which the event or circumstance occurs approximately. For example, when used in connection with a value, the terms may refer to a range of variation less than or equal to $\pm$ 10% of the value, for example, less than or equal to $\pm$5%, less than or equal to $\pm$4%, less than or equal to $\pm$3%, less than or equal to $\pm$2%, less than or equal to $\pm$1%, less than or equal to $\pm$0.5%, less than or equal to $\pm$0.1%, less than or equal to $\pm$0.05%, etc. For example, if the difference value between the two values is less than or equal to $\pm$10% of the average of the values (for example, less than or equal to $\pm$5%, less than or equal to $\pm$4%, less than or equal to $\pm$3%, less than or equal to $\pm$2%, less than or equal to $\pm$1%, less than or equal to $\pm$0.5%, less than or equal to $\pm$0.1% or less than or equal to $\pm$0.05%), then the two values can be considered "substantially" the same.

In addition, quantities, ratios, and other values are sometimes presented in a range format herein. It should be understood that the range format of the present application is intended for convenience and briefness and should be understood flexibly. Not only are the values explicitly limited in the range contained, but also all individual values or sub-ranges covered within the range are contained as each value and each sub-range are explicitly specified.

## I. Precursor material of lithium cobalt oxide

In some embodiments, the present application provides a precursor of lithium cobalt oxide, comprising a substrate material and a coating layer, wherein the general formula of the substrate material is represented as $CoO_x(OH)_y(CO_3)_z$, wherein the coating layer is located on the surface of the substrate material, the coating layer contains a metal oxide, and the general formula of the metal oxide is represented as $MO_n$, wherein $0<x<1.5$, $0 \leq y<2$, $0<z<1$, $0<n<2.5$.

In some embodiments, the mass fraction of the metal oxide is about 0.01% to about 5% based on the total mass of the precursor of lithium cobalt oxide.

In some embodiments, the mass fraction of the metal oxide is about 0.5% to about 4%.

In some embodiments, the mass fraction of the metal oxide is about 1% to about 3%.

In some embodiments, the mass fraction of the metal oxide is about 2%.

In some embodiments, M comprises at least one selected from the group consisting of Al, Mg, Ti, Zr, Ni, Mn, Y, Nb, La, V, Zn, Mo, Ru, Ta, W, Re, Sn, Ge, or Ga.

In some embodiments, M comprises at least one selected from the group consisting of Ti, Zr, Ni, Mn, Y, La, Zn, Ru, or Ge.

In some embodiments, M comprises at least one selected from the group consisting of Ti, Zr, Ni, Mn, Y, or La.

In some embodiments, $MO_n$ comprises at least one selected from the group consisting of $NiO$, $MnO_2$, $TiO_2$, $La_2O_3$, $Y_2O_3$, or $ZrO_2$.

In some embodiments, the thickness of the coating layer is about 50 nm to about 1 $\mu$m.

In some embodiments, the thickness of the coating layer is about 100 nm to about 800 nm.

In some embodiments, the thickness of the coating layer is about 200 nm to about 600 nm.

In some embodiments, the substrate material comprises at least one selected from the group consisting of cobaltous oxide, cobaltic oxide, cobaltosic oxide, cobaltous hydroxide, cobalt oxyhydroxide, and cobalt carbonate.

In some embodiments, the particle diameter of the metal oxide is about 10 nm to about 120 nm.

In some embodiments, the particle diameter of the metal oxide is about 50 nm to about 100 nm.

In some embodiments, the median diameter (Dv50) of the precursor of lithium cobalt oxide is about 5 $\mu$m to about 50 $\mu$m.

In some embodiments, the median diameter (Dv50) of the precursor of lithium cobalt oxide is about 10 $\mu$m to about 25 $\mu$m.

The cathode material of the composite of the lithium cobalt oxide prepared from the aforementioned precursor has excellent structural stability in a high voltage charging and discharging environment, and thus improves cycle stability, high temperature performance, and safety performance of the electrochemical device, relative to the material obtained by directly coating the surface of the lithium cobalt oxide. This is mainly because the coating layer on the surface of the precursor can exist stably, and a stable coating interface can be formed in the subsequent multiple sintering processes, so that the material structure is more stable and the electrical properties are excellent. Specifically, a better coating material can be obtained by performing coating during the synthesis of the precursor of lithium cobalt oxide. With substrate materials as the substrate, the metal oxide is adhered to the surface of the substrate during a ball milling process, and in the subsequent sintering process, a solid solution contact interface having good crystallinity is formed between the substrate and the coating layer by diffusion of metal atoms, and is stably coated on the surface of the substrate. In the coated material, the surface-stabilized metal oxide coating layer forms a buffer zone between high-valent cobalt and the electrolyte, and the surface coating layer can perform certain compensation even if there is a potential difference at the electrode/electrolyte interface, thereby limiting the oxidation of the electrolyte by the high-valent cobalt, and reducing the phase transition and side reactions of the cathode particles. The more stable and orderly crystal structure means that the cathode of lithium cobalt oxide can have a higher and reversible capability of deintercalating the lithium ions in harsh environments, thereby significantly improving the capacity retention rate of the cathode of lithium cobalt oxide along with cycling and improving the Interval Cycle performance of the material. In other words, on one hand, the surface coating layer stabilizes the bulk phase structure of the lithium cobalt oxide, stabilizes the surface oxygen structure, and reduces the oxygen activity, thereby inhibiting oxygen release and the dissolution of Co, and improving the structural stability and thermal stability of the cathode material. Meanwhile, the stable surface coating layer can reduce the following defects: the precursor of lithium cobalt oxide is subjected to particle breakage during the subsequent synthesis of the composite of lithium cobalt oxide, which causes some structural defects of the particles, increases more unprotected active surfaces, increases the side reaction with the electrolyte and deteriorates the long cycle performance. On the other hand, the stable surface coating layer plays a role in isolating the lithium cobalt oxide from the electrolyte, thereby ensuring that the particle interface of the lithium cobalt oxide is not damaged at high voltage and reducing the interfacial reaction, while improving the overall conductivity of the cathode material, and effectively improving the cycle performance and safety performance of the battery.

## II. Method for preparing the precursor of lithium cobalt oxide

According to a second aspect of the present application, a method for preparing a precursor of lithium cobalt oxide is provided. The precursor of lithium cobalt oxide is prepared by a solid phase synthesis method, wherein the coating is more uniform since the solid phase synthesis method is adopted. The solid phase synthesis method uses several solid reactants as raw materials, first fully mixes the several solid reactants by grinding (for example, ball milling, etc.), and then obtains a product by a high-temperature sintering reaction. The properties of the product are adjusted by controlling the parameters, such as the mass ratio of the reactants, the speed of the grinding, the duration of the grinding, and the temperature of the sintering. Specifically, the synthesis method comprises the following steps:

(1) Preparing a mixture of the precursor having a coating structure by grinding:
A substrate material of the precursor of lithium cobalt oxide (at least one of $CoO$, $Co_2O_3$, $Co_3O_4$, $Co(OH)_2$, $CoCO_3$ and $CoOOH$), a metal oxide or a metal salt, and a liquid organic solvent are ball-milled in a roller ball mill tank to obtain a mixture of the precursor of lithium cobalt oxide having a coating structure;

(2) Preparing the precursor of lithium cobalt oxide having a coating structure by high temperature sintering:
The mixture of the precursor obtained in (1) is sintered in an air atmosphere, and the obtained powder is crushed and ground to obtain the desired precursor having a coating structure.

In some embodiments, in the grinding step, the grinding time is about 4 hours to about 12 hours.

In some embodiments, in the grinding step, the grinding time is about 6 hours to about 10 hours.

In some embodiments, in the grinding step, the grinding speed is about 80 rpm to about 120 rpm.

In some embodiments, in the sintering step, the sintering temperature is about 400°C to about 800°C.

In some embodiments, in the sintering step, the sintering time is about 4 hours to 10 hours.

In some embodiments, in the sintering step, the sintering time is about 6 hours to 8 hours.

In some embodiments, the substrate material comprises at least one selected from the group consisting of cobaltous oxide, cobaltic oxide, cobaltosic oxide, cobaltous hydroxide, cobalt oxyhydroxide, or cobalt carbonate.

In some embodiments, a metal element in the metal oxide or the metal salt comprises at least one selected from the group consisting of Al, Mg, Ti, Zr, Ni, Mn, Y, Nb, La, V, Zn, Mo, Ru, Ta, W, Re, Sn, Ge, or Ga.

In some embodiments, $MO_n$ comprises at least one selected from the group consisting of $NiO$, $MnO_2$, $TiO_2$, $La_2O_3$, $Y_2O_3$, or $ZrO_2$.

In some embodiments, the liquid organic solvent comprises at least one selected from the group consisting of alcohol, acetone, ethylene glycol, polyethylene glycol, triethylene glycol, or ethyl acetate.

In some embodiments, the method further comprises mixing and sintering the precursor of lithium cobalt oxide and the lithium salt in an equimolar ratio of cobalt atoms to lithium atoms to form a composite of lithium cobalt oxide having a coating structure on the surface.

In the above preparing method, a better coating material can be obtained by performing coating during the synthesis of the precursor of lithium cobalt oxide. With the precursor of lithium cobalt oxide as the substrate material, the metal oxide is adhered to the surface of the substrate material during the ball milling process, and in the subsequent sintering process, a solid solution contact interface having good crystallinity is formed between the substrate material and the coating layer by diffusion of metal atoms, and is stably coated on the surface of the substrate material. On one hand, the surface coating layer stabilizes the bulk phase structure of the lithium cobalt oxide, stabilizes the surface oxygen structure, and reduces the oxygen activity, thereby inhibiting oxygen release and the dissolution of Co, and improving the structural stability and thermal stability of the cathode material. Meanwhile, the stable surface coating layer can reduce particle breakage of the precursor during the subsequent synthesis of the lithium cobalt oxide, which causes some structural defects of the particles, increases more unprotected active surfaces, increases the side reaction with the electrolyte and deteriorates the long cycle performance. On the other hand, the stable surface coating layer plays a role of isolating the lithium cobalt oxide from the electrolyte, thereby ensuring that the particle interface of the lithium cobalt oxide is not damaged at high voltage, reducing the interfacial reaction, and meanwhile improving the overall conductivity of the cathode material, and effectively improving the cycle performance and safety performance of the battery.

As mentioned above, the present application also provides a method for preparing such precursor, and the method is low in cost, simple in process, easy to control in reaction conditions, and suitable for industrial production.

III. Method for preparing the cathode material of lithium cobalt oxide

A third aspect of the present application provides a method for preparing a composite of lithium cobalt oxide, which is prepared from the above precursor of lithium cobalt oxide, and the preparation process is as follows:

(1) mixing the above precursor of lithium cobalt oxide $CoO_x(OH)_y(CO_3)_zMO_n$ having a surface coating structure with a lithium-containing material according to an equimolar ratio of cobalt atoms to lithium atoms; and

(2) sintering the mixed powder at a high temperature of about 900°C for about 10 hours, wherein the obtained powder is the cathode material of composite of lithium cobalt oxide having a coating structure.

IV. Cathode material of lithium cobalt oxide

A fourth aspect of the present application provides a composite of lithium cobalt oxide, which is prepared from the above precursor of lithium cobalt oxide.
In some embodiments, the median diameter Dv50 of the composite of lithium cobalt oxide is about 7 μm to about 50 μm, further preferably, about 15 μm to about 40 μm, and further preferably about 20 μm to about 30 μm.
The metal oxide forms a stable interface solid solution at the contact interface between the metal oxide and the lithium cobalt oxide substrate by atomic diffusion on the surface of the composite of lithium cobalt oxide.

V. Electrochemical device

The embodiments of the present application also provide an electrochemical device, comprising a cathode, an anode, an separator disposed between the cathode and the anode, and an electrolyte, wherein the cathode comprises the composite of lithium cobalt oxide prepared by the above precursor $CoO_x(OH)_y(CO_3)_zMO_n$.
In some embodiments, the electrochemical device is a lithium-ion battery prepared by using the following method.
Preparation of a cathode: the cathode active material, i.e., the composite of lithium cobalt oxide, a conductive agent, and a cathode binder are dispersed in a solvent system according to a certain mass ratio, stirred and mixed uniformly; then the above mixture is coated on a cathode current collector; and drying and cold pressing are performed to obtain the cathode. In some embodiments, the conductive agent improves the conductivity of the cathode active material or the anode active material by providing a conductive path to the cathode active material or the anode active material. The conductive agent may comprise at least one of the following: acetylene black, ketjen black, natural graphite, carbon black, carbon fiber, metal powder or metal fiber (for example, copper, nickel, aluminum or silver), but the examples of the conductive agent are not limited thereto. Any suitable conductive agent available in the art may be used. In some embodiments, the amount of the conductive agent may be suitably adjusted. The amount of the conductive agent ranges from about 1 to about 30 parts by weight, or from about 5 to about 10 parts by weight based on 100 parts by weight of the cathode active material, the conductive agent and the binder.
In some embodiments, examples of the solvent comprise N-methylpyrrolidone, acetone or water, but the disclosure is not limited thereto, and any suitable solvent available in the art may be used. In some embodiments, the amount of the solvent may be suitably adjusted.
In some embodiments, the binder may help the bonding between the active material and the conductive agent or help the bonding between the active material and a current collector. Embodiments of the binder comprise polyvinylidene fluoride, polyvinylidene chloride, carboxymethylcellulose, polyvinyl acetate, polyvinylpyrrolidone, polypropylene, polyethylene, and various polymers, but the present disclosure is not limited thereto. Any suitable binder available in the art may be used. The amount of the binder ranges from about 1 to about 30 parts by weight, or from about 2 to about 10 parts by weight based on 100 parts by weight of the active material, the conductive agent, and the binder.
In some embodiments, the current collector has a thickness in the range of about 3 microns to about 20 microns, but the disclosure is not limited thereto. The current collector is not particularly limited as long as the current collector is electrically conductive without causing adverse chemical changes in the manufactured battery. Embodiments of the current collector comprise copper, stainless steel, aluminum, nickel, titanium, or an alloy (for example, a copper-nickel alloy), but the disclosure is not limited thereto. In some embodiments, fine irregularities (for example, surface roughness) may be included in the surface of the current collector to enhance the adhesion of the surface of the current collector to the active material. In some embodiments, the current collector may be used in a variety of forms, and the embodiments of the current collector comprise membranes, pieces, foils, meshes, porous structures, foams, or nonwovens, but the disclosure is not limited thereto.
Preparation of an anode: the anode active material, i.e., artificial graphite, a conductive agent, an anode binder, and a thickener sodium carboxymethyl cellulose (CMC) are dispersed in a solvent system according to a certain mass ratio, fully stirred and mixed uniformly; the above mixture is coated on an anode current collector; and drying and cold pressing performed to obtain the anode .

In some embodiments, the active material may comprise lithium metal, a lithium alloy, a transition metal oxide, a non-transition metal oxide, and a carbon-based material.

In some embodiments, the lithium alloy material comprises an element capable of forming an alloy with Y, and Y comprises at least one of the elements Si, Sn, Al, Ge, and Sb, but the present disclosure is not limited thereto.

In some embodiments, the transition metal oxide may comprise a lithium titanium oxide and a lithium vanadium oxide.

In some embodiments, the non-transition metal oxide may comprise $SiO_x$ (0<x<2), $SnO_2$, and the like.

In some embodiments, the carbon-based material comprises crystalline carbon, amorphous carbon, or a mixture thereof. The crystalline carbon comprises non-formed, flat, flake, round, fibrous natural graphite or artificial graphite, and the amorphous carbon may comprise soft carbon, hard carbon or mesophase pitch carbonization products.

Separator: a polyethylene (PE) porous polymeric film is used as the separator. The material of the separator may comprise glass fiber, polyester, polyethylene, polypropylene, polytetrafluoroethylene or a combination thereof. The pores in the separator have a diameter ranging from about 0.01 microns to about 1 micron, and the thickness of the separator is in the range from about 5 microns to about 500 microns.

Electrolyte: the electrolyte comprises a nonaqueous electrolyte and a lithium salt, and the nonaqueous electrolyte may comprise a nonaqueous electrolyte solution, an organic solid electrolyte, and an inorganic solid electrolyte.

In some embodiments, the non-aqueous electrolyte solvent comprises an aprotic organic solvent, and examples thereof comprise propylene carbonate, ethylene carbonate, dimethyl carbonate, diethyl carbonate, methyl formate, ethyl propionate, and methyl propionate.

In some embodiments, the lithium salt may be LiCl, $LiBF_4$, $LiPF_6$, $LiCF_3SO_3$, $LiAsF_6$, $CH_3SO_3Li$, and mixtures thereof.

The cathode, the separator, and the anode are stacked in this order, so that the separator is between the cathode and anode to play a role of isolation, and are wound. The wound product is placed in an outer package, injected with the electrolyte, and is packaged.

VI. Embodiments

The present application will be further described in detail below with reference to the embodiments. However, it should be understood that the following embodiments are merely examples, and the embodiments of the present application are not limited thereto.

Embodiment 1:

Embodiment 1 describes a precursor of lithium cobalt oxide having a coating layer of a mixture of nickel oxide and manganese oxide on the surface, wherein a mass fraction of the mixture of nickel oxide and manganese oxide in the precursor of lithium cobalt oxide is about 0.01%, and a composite of lithium cobalt oxide prepared from the precursor. The preparation steps comprise:

(1) Ball-milling (i.e., grinding) the lithium cobalt oxide substrate material $Co_3O_4$, nickel oxide, manganese oxide, and an alcohol solvent in a roller bail mill, wherein the ball milling time was about 8 hours, and the ball milling speed was about 100 rpm, the mass of the reactants was selected such that the mass fraction of the metal oxides in the precursor of lithium cobalt oxide was about 0.01%, that is, 0.123 g of the metal oxide was added to 1000 g of $Co_3O_4$ to obtain a mixture of the precursor having a coating layer of nickel oxide and manganese oxide on the surface;

(2) subsequently, placing the mixture of the precursor having the above coating layer obtained in step (1) in an air atmosphere and sintering at 600°C for about 8 hours, and crushing and grinding the obtained powder to obtain the required precursor having the coating layer; and

(3) mixing the precursor of lithium cobalt oxide obtained in step (2) with a lithium salt in a roller ball mill according to a molar ratio of the lithium atoms to cobalt atoms of about 1:1, and sintering the mixed powder at about 900°C for about 10 hours, wherein the obtained powder was the cathode material of the composite of lithium cobalt oxide having a coating structure.

Embodiment 2:

The cathode material of the composite of lithium cobalt oxide is prepared in substantially the same method as in Embodiment 1, wherein the difference is that the total coating mass fraction of the nickel oxide and manganese oxide was controlled to be about 0.1%.

Embodiment 3:

The cathode material of the composite of lithium cobalt oxide is prepared in substantially the same method as in Embodiment 1, wherein the difference is that the total coating mass fraction of the nickel oxide and manganese oxide was controlled to be about 1%.

Embodiment 4:

The cathode material of the composite of lithium cobalt oxide is prepared in substantially the same method as in Embodiment 1, wherein the difference is that the total coating mass fraction of the nickel oxide and manganese oxide was controlled to be about 2%.

Embodiment 5:

The cathode material of the composite of lithium cobalt oxide is prepared in substantially the same method as in Embodiment 1, wherein the difference is that the total coating mass fraction of the nickel oxide and manganese oxide was controlled to be about 3%.

Embodiment 6

The cathode material of the composite of lithium cobalt oxide is prepared in substantially the same method as in Embodiment 1, wherein the difference is that the total coating mass fraction of the nickel oxide and manganese oxide was controlled to be about 4%.

Embodiment 7

The cathode material of the composite of lithium cobalt oxide is prepared in substantially the same method as in Embodiment 1, wherein the difference is that the total coating mass fraction of the nickel oxide and manganese oxide was controlled to be about 5%.

Embodiment 8

The cathode material of the composite of lithium cobalt oxide is prepared in substantially the same method as in Embodiment 1, wherein the difference is that the metal oxide source was titanium dioxide so as to control the coating element to be titanium, and the sintering temperature in step (2) was controlled to be about 200°C.

Embodiment 9

The cathode material of the composite of lithium cobalt oxide is prepared in substantially the same method as in Embodiment 1, wherein the difference is that the metal oxide source was titanium dioxide so as to control the coating element to be titanium, and the sintering temperature in step (2) was controlled to be about 400°C.

Embodiment 10:

The cathode material of the composite of lithium cobalt oxide is prepared in substantially the same method as in Embodiment 1, wherein the difference is that the metal oxide source was titanium dioxide so as to control the coating element to be titanium, and the sintering temperature in step (2) was controlled to be about 600°C.

Embodiment 11

The cathode material of the composite of lithium cobalt oxide is prepared in substantially the same method as in Embodiment 1, wherein the difference is that the metal oxide source was titanium dioxide so as to control the coating element to be titanium, and the sintering temperature in step (2) was controlled to be about 800°C.

Embodiment 12

The cathode material of the composite of lithium cobalt oxide is prepared in substantially the same method as in Embodiment 1, wherein the difference is that the metal oxide source was titanium dioxide so as to control the coating element to be titanium, and the sintering temperature in step (2) was controlled to be about1000°C.

Embodiment 13

The cathode material of the composite of lithium cobalt oxide is prepared in substantially the same method as in Embodiment 1, wherein the difference is that the metal oxide source was titanium dioxide so as to control the coating element to be titanium, and the cobalt source was controlled to be CoOOH.

Embodiment 14

The cathode material of the composite of lithium cobalt oxide is prepared in substantially the same method as in Embodiment 1, wherein the difference is that the metal oxide source was titanium dioxide to control the coating element so as to be titanium, and the cobalt source was controlled to be $Co(OH)_2$.

Embodiment 15

The cathode material of the composite of lithium cobalt oxide is prepared in substantially the same method as in Embodiment 1, wherein the difference is that the metal oxide source was lanthanum trioxide and yttrium trioxide so as to control the coating elements to be lanthanum and yttrium.

Embodiment 16:

The cathode material of the composite of lithium cobalt oxide is prepared in substantially the same method as in Embodiment 1, wherein the difference is that the metal oxide source was lanthanum trioxide and zirconium dioxide so as to control the coating elements to be lanthanum and zirconium.

Embodiment 17

The cathode material of the composite of lithium cobalt oxide is prepared in substantially the same method as in Embodiment 1, wherein the difference is that the metal oxide source was zirconium dioxide and yttrium trioxide so as to control the coating elements to be zirconium and yttrium.

Comparative example 1:

The cathode material of the composite of lithium cobalt oxide was prepared in substantially the same method as in Embodiment 1, wherein the difference is that the lithium cobalt oxide substrate material $Co_3O_4$ was not coated, and steps (2) and (3) in Embodiment 1 were directly carried out with $Co_3O_4$.

Comparative example 2:

The cathode material of the composite of lithium cobalt oxide was prepared in substantially the same method as in Embodiment 1, wherein the difference is that sintering was not performed after the coating of the nickel oxide and manganese oxide, that is, step (2) in Embodiment 1 was omitted.

Comparative example 3:

The lithium cobalt oxide $LiCoO_2$ was synthesized directly by using the uncoated lithium cobalt oxide substrate material $Co_3O_4$ under substantially the same conditions as in step (3) in Embodiment 1, and the lithium cobalt oxide $LiCoO_2$ was subjected to the surface coating of nickel oxide and manganese oxide under substantially the same conditions as in steps (1) and (2) in Embodiment 1 after the lithium cobalt oxide was synthesized to form the cathode material of the composite of lithium cobalt oxide.

Comparative example 4:

The cathode material of the composite of lithium cobalt oxide was prepared in substantially the same method as in Embodiment 1, wherein the difference is that CoOOH was used as the lithium cobalt oxide substrate material and the lithium cobalt oxide substrate material was not coated. That is, the cathode material of the composite of lithium cobalt oxide was prepared by using the lithium cobalt oxide substrate material CoOOH under substantially the same conditions as in steps (2) and (3) in Embodiment 1.

Comparative example 5:

The cathode material of the composite of lithium cobalt oxide was prepared in substantially the same method as in Embodiment 1, wherein the difference is that $Co(OH)_2$ was used as the lithium cobalt oxide substrate material and the lithium cobalt oxide substrate material was not coated. That is, the cathode material of the composite of lithium cobalt oxide was prepared by using the lithium cobalt oxide substrate material $Co(OH)_2$ under substantially the same conditions as in steps (2) and (3) in Embodiment 1.

Briefly, Embodiments 2-17 employed substantially the same preparing method as in Embodiment 1, and the differences lie in the metal oxides of different coating contents, different coating elements, different sintering temperatures in the synthesis process of the precursor of lithium cobalt oxide, different cobalt sources, and two-element coating of different combinations are adopted. Specifically, Embodiments 2-7 were coated with the mixture of the nickel oxide and manganese oxide of different contents. The coating element in Embodiments 8-14 was titanium, wherein the sintering temperatures in the synthesis process of the precursor of lithium cobalt oxide in Embodiments 8-12 were different, and the cobalt sources were different in Embodiments 10, 13, and 14. Two different metal elements were used for coating respectively in Embodiments 15-17.

Comparative Examples 1-5 adopted substantially the same method as in Embodiment 1, and the difference is that Comparative Example 1 performed no coating and the adopted cobalt source is $Co_3O_4$. Comparative Example 2 performs no sintering. Comparative Example 3 performed coating after the composite of lithium cobalt oxide was synthesized. Comparative Example 4 performed no coating and the adopted cobalt source was CoOOH. Comparative Example 5 performed no coating and the adopted cobalt source was $Co(OH)_2$.

In order to test the performances of 0.2C discharge gram capacity mAh/g, high temperature storage thickness expansion ratio%, and Interval Cycle (cycle capacity retention rate%) of above Embodiments 1-17 and Comparative Examples 1-5, the above prepared composites of lithium cobalt oxide were adopted respectively to prepare the lithium ion batteries in the following manner, and the prepared lithium ion batteries were tested.

Preparation of lithium ion battery:

Preparation of a cathode: the active material, i.e., cathode material of the composite of lithium cobalt oxide , the conductive agent acetylene black, and the binder polyvinylidene fluoride (PVDF) were fully stirred and mixed uniformly in a N-methylpyrrolidone solvent system according to a mass ratio of about 94:3:3, the above mixture was then coated on an Al foil, the Al foil coated with the above mixture is dried and cold pressed to obtain the positive electrode piece.

Preparation of an anode: the active material artificial graphite, the conductive agent acetylene black, the binder styrene-butadiene rubber (SBR), and the thickener sodium carboxymethyl cellulose (CMC) were fully stirred and mixed uniformly in a deionized water solvent system according to the mass ratio of about 95:2:2:1, and the above mixture is then coated on a Cu foil, the Cu foil coated with the above mixture was dried and cold pressed to obtain the anode.

Separator: a polyethylene (PE) porous polymeric film was used as the separator.

Preparation of electrolyte: 1 mol/L of $LiPF_6$ was added to a solvent of which the ratio of dimethyl carbonate to ethylene carbonate to ethyl methyl carbonate is about 1:1:1.

The cathode, the separator, and the anode were stacked in order, so that the separator was between the cathode and the anode to play the role of isolator, and was wound. The wound product was placed in an outer package, and was injected with the prepared base electrolyte and is packaged.

Performance test on the lithium ion battery

SEM test

The scanning electron microscope (SEM) obtains the morphology and structure of a sample by the interaction between an electron beam and the sample and by imaging with secondary electron signals. The scanning electron microscope used for analysis of the morphology structure and element distribution of the sample in the experiment is the JSM-6360LV and its associated X-ray energy spectrometer from the JEOL Company.

Capacity test

Five batteries were taken from the comparative examples and the embodiments respectively, are charged to 4.45 V at a constant current of 0.2C rate at 25°C, and further charged at the constant voltage of 4.4 5 V until the current was less than 0.05C, so that the batteries are in the fully charged state of 4.45 V. Then, the batteries were discharged to 3.0 V at a 0.2C rate to obtain a discharge capacity, and the discharge gram capacity was further obtained by the following calculation formula:

$$\text{Discharge capacity} = \text{discharge capacity/mass of the cathode material.}$$

Cycle performance test

Interval Cycle is a unique cycle test, which is mainly carried out by the combination of charging and discharging and storage, that is. storage is performed after one charging and discharging, then the charging and discharging test is performed, and so on. The test flow is as follows.

Five lithium ion batteries prepared from the electrolytic solution of all the comparative examples and the embodiments were taken respectively, and were charged and discharged repeatedly by the following steps, and the discharge capacity retention ratio of the lithium ion batteries is calculated.

Firstly, in the environment of 45°C, the first charging and discharging was performed, and constant current and constant voltage charging is performed under a charging current of 1C (that is, the current value of the theoretical capacity was completely discharged within 1 hour) until the upper limit voltage is 4.45 V. Then storage was performed at 45°C for 20.5hours. Then constant current discharging was performed at a discharge current of 0.5C until the lower limit voltage was 3V. When the cycle was performed for the 24th time, the charging cutoff voltage (i.e., the upper limit voltage of charge) is changed to 4.4 V, the subsequent cycle test is finished, and the discharge capacity of the 80th cycle is recorded.

$$\text{Cycle capacity retention rate} = (\text{Discharge capacity of the 80th cycle/discharge capacity of the first cycle}) \times 100\%.$$

High temperature storage performance test

Five batteries were taken from the comparative examples and the examples respectively, and were charged at a constant current of 0.5C rate at 25°C until the voltage was higher than 4.45 V. The charging was further performed at a constant voltage of 4.45 V until the current was below 0.05C, so that the batteries are in a fully charged state of 4.45 V. The fully charged battery thicknesses before the storage are tested and recorded as $D_0$. Then the fully charged batteries are placed in an oven at 85°C, are taken out after 24 hours, and the thicknesses after storage are immediately tested and recorded as $D_1$.

The thickness expansion ratio before and after the storage of the batteries was calculated according to the following formula:

$$\varepsilon = (D_1 - D_0)/D_0 \times 100\%$$

Table 1 as follows shows the differences in the experimental conditions of Embodiments 1-17 and Comparative Examples 1-5 for preparing the cathode material of the composite of lithium cobalt oxide and the 0.2 C discharge gram capacity mAh/g, the high temperature storage thickness expansion ratio %, and the Interval Cycle (the cycle capacity retention rate%) of the lithium ion batteries prepared from the cathode material of the composite of lithium cobalt oxide of Embodiments 1-17 and Comparative Examples 1-5 according to the above steps.

Table 1

| | Precursor type | Coating element | Coating mass | Sintering temperature | Sintering atmosphere | 0.2C discharge gram capacity mAh/g | High temperat ure storage thickness expansion ratio % | Interval Cycle capacity retention rate % |
|---|---|---|---|---|---|---|---|---|
| Embodiment 1 | $Co_3O_4$ | Ni and Mn | 0.01% | 600°C | Air | 179 | 35% | 78% |
| Embodiment 2 | $Co_3O_4$ | Ni and Mn | 0.1% | 600°C | Air | 178 | 28% | 80% |
| Embodiment 3 | $Co_3O_4$ | Ni and Mn | 1.0% | 600°C | Air | 176 | 19% | 83% |
| Embodiment 4 | $Co_3O_4$ | Ni and Mn | 2.0% | 600°C | Air | 175 | 15% | 88% |
| Embodiment 5 | $Co_3O_4$ | Ni and Mn | 3.0% | 600°C | Air | 174 | 13% | 87% |
| Embodiment 6 | $Co_3O_4$ | Ni and Mn | 4.0% | 600°C | Air | 173 | 12% | 86% |
| Embodiment 7 | $Co_3O_4$ | Ni and Mn | 5.0% | 600°C | Air | 172 | 12% | 86% |
| Embodiment 8 | $Co_3O_4$ | Ti | 2.0% | 200°C | Air | 172 | 19% | 77% |
| Embodiment 9 | $Co_3O_4$ | Ti | 2.0% | 400°C | Air | 176 | 13% | 82% |
| Embodiment 10 | $Co_3O_4$ | Ti | 2.0% | 600°C | Air | 176 | 10% | 83% |
| Embodiment 11 | $Co_3O_4$ | Ti | 2.0% | 800°C | Air | 168 | 15% | 78% |
| Embodiment 12 | $Co_3O_4$ | Ti | 2.0% | 1000°C | Air | 160 | 20% | 62% |
| Embodiment 13 | CoOOH | Ti | 2.0% | 600°C | Air | 172 | 12% | 80% |
| Embodiment 14 | $Co(OH)_2$ | Ti | 2.0% | 600°C | Air | 168 | 15% | 78% |
| Embodiment 15 | $Co_3O_4$ | La and Y | 2% | 600°C | Air | 176 | 11% | 82% |
| Embodiment 16 | $Co_3O_4$ | La and Zr | 2% | 600°C | Air | 175 | 9% | 79% |
| Embodiment 17 | $Co_3O_4$ | Zr and Y | 2% | 600°C | Air | 177 | 10% | 83% |
| | | | | | | | | |
| Comparative example 1 | $Co_3O_4$ | \ | 0 | 600°C | Air | 175 | 45% | 68% |
| Comparative example 2 | $Co_3O_4$ | Ni and Mn | 2% | \ | \ | 168 | 42% | 70% |
| Comparative example 3 | $LiCoO_2$ | Ni and Mn | 2% | 600°C | Air | 162 | 44% | 71% |

EP 3 686 159 A1

|  | Precursor type | Coating element | Coating mass | Sintering temperature | Sintering atmosphere | 0.2C discharge gram capacity mAh/g | High temperat ure storage thickness expansion ratio % | Interval Cycle capacity retention rate % |
|---|---|---|---|---|---|---|---|---|
| Comparative example 4 | CoOOH | \ | 0 | 600°C | Air | 160 | 42% | 69% |
| Comparative example 5 | Co(OH)$_2$ | \ | 0 | 600°C | Air | 161 | 43% | 70% |

Noted: the sintering temperature in column 5 of Table 1 refers to the sintering temperature during the synthesis of the precursor of lithium cobalt oxide, that is, the sintering temperature in above step (2), while the sintering atmosphere in steps (2) and (3) is the air atmosphere.

2.1 Discussion on advantages of coating the precursor of lithium cobalt oxide Referring to Embodiment 4 and Comparative Examples 1 and 3, it can be known that the material properties obtained by coating the precursor of lithium cobalt oxide are superior to the material properties obtained without adopting the coating means, and are superior to the material properties obtained by coating the synthesized lithium cobalt oxide. According to the present application, by coating the precursor of lithium cobalt oxide, the high temperature storage thickness expansion ratio and the Interval Cycle capacity retention ratio are significantly superior to the uncoated lithium cobalt oxide material, and are significantly superior to the material obtained by coating the synthesized lithium cobalt oxide.

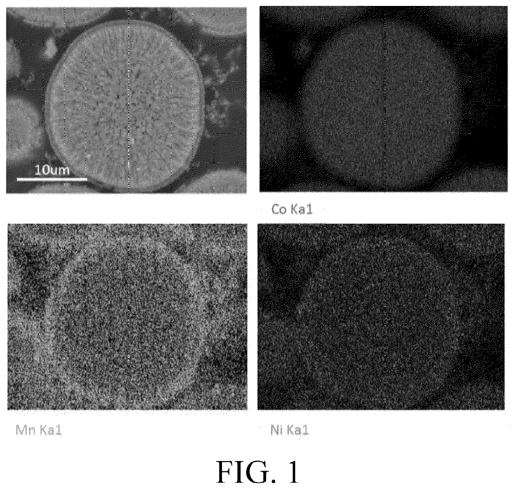

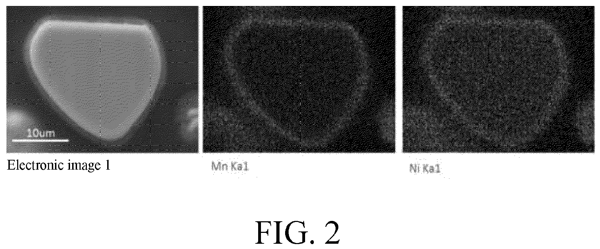

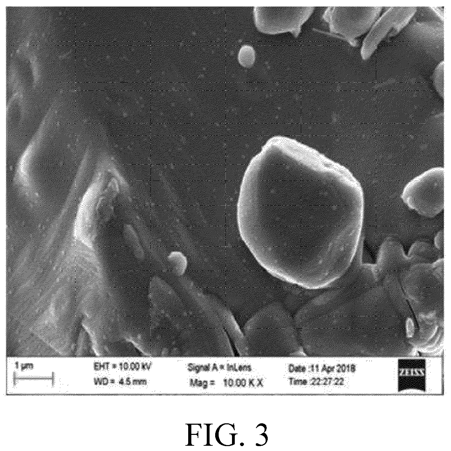

It can be seen in combination of the SEM images of FIG. 1 and FIG. 2 that the surface of the precursor of lithium cobalt oxide has an obvious coating layer, and the coating layer still stably exists on the surface of the composite particles of lithium cobalt oxide synthesized by the precursor. Moreover, it can be seen in combination of the elemental distribution diagrams of FIG. 1 and FIG. 2 and the SEM image of FIG. 3 that by performing the surface coating on the precursor of lithium cobalt oxide through the solid phase synthesis method, the precursor of lithium cobalt oxide and the composite of lithium cobalt oxide with more uniform coating can be obtained. The following problem in the prior art that when a plurality of elements is coated at the same time is overcome: selective coating, that is, when the coating layer is unevenly distributed on the surface of the particles, the coating effect is greatly affected.

The above advantages are mainly based on the fact that the coating layer on the surface of the precursor can stably exist, and a stable coating interface is formed in the subsequent multiple sintering processes, so that the material structure is more stable and the electrical properties are more excellent. Specifically, a better coating material can be obtained by performing coating in the phase of the precursor of lithium cobalt oxide. With the precursor of lithium cobalt oxide as the substrate, the metal oxide is adhered to the surface of the material substrate during the ball milling process, and in the subsequent sintering process, a solid solution contact interface having good crystallinity is formed between the substrate material and the coating layer by the diffusion of metal atoms, and is stably coated on the surface of the substrate material. On one hand, the surface coating layer stabilizes the bulk phase structure of the lithium cobalt oxide, stabilizes the surface oxygen structure, and reduces the oxygen activity, thereby inhibiting oxygen release and the dissolution of Co, and improving the structural stability and thermal stability of the cathode material. Meanwhile, the stable surface coating layer can reduce particle breakage of the precursor during the subsequent synthesis of the lithium cobalt oxide, which causes some structural defects of the particles, increases more unprotected active surfaces, increases the side reaction with the electrolytic solution and deteriorates the long cycle performance. On the other hand, the stable surface coating layer plays a role of isolating the lithium cobalt oxide from the electrolytic solution, thereby ensuring that the particle interface of the lithium cobalt oxide is not damaged at high voltage, reducing the interfacial reaction, and meanwhile improving the overall conductivity of the cathode material, and effectively improving the cycle performance and safety performance of the battery.

2.2 Discussion on the content of coating element M in the precursor $CoO_x(OH)_y(CO_3)_zMO_n$

In order to obtain the cathode material of the composite of lithium cobalt oxide excellent in cycle stability and safety performance under high voltage charging and discharging conditions, the present application researched the content of the surface coating element M in the precursor $CoO_x(OH)_y(CO_3)_zMO_n$, wherein M is one or more metal elements.

It can be clearly seen from the test results of Comparative Example 1 and Embodiments 1-7 that the performances of the composite of lithium cobalt oxide synthesized from the precursor of lithium cobalt oxide coated with the metal elements nickel and manganese on the surface are greatly improved. The high temperature storage performance and cycle performance of the batteries are improved by varying contents. The coating mass fraction of the metal oxide is preferably about 0.01% to about 5%. further preferably about 1% to about 3%, and further preferably about 2%. As the coating mass increases, the surface stability of the lithium cobalt oxide is also improved, and the cycle and high-temperature storage performances of the battery are also continuously improved. However, when the coating mass is too high, the improvement effect is no longer obvious. In addition, the decrease of the material gram capacity is more obvious when the coating mass is too large. However, when the coating mass is about 0.01%, since the addition is too small, the improvement of the electrical properties is not obvious. The coating of a proper amount of nickel oxide and manganese oxide can ensure the optimization of the surface stability of the lithium cobalt oxide by the coating layer, and does not cause the material to lose a large discharge specific capacity. The results also show that the coating layer can effectively improve the overall conductivity of the cathode material of the composite of lithium cobalt oxide, the interface impedance during charge transfer is reduced, the rapid deintercalation of lithium ions is not affected, the interface structure can be better stabilized and the surface structure stability of the material particles is improved, and that the safety performance of the battery is significantly improved.

It can be seen from the experimental results of Comparative Example 1 and Embodiment 10 that the coating of Ti has a similar effect. In view of the combined high-temperature storage expansion ratio and the cycle capacity retention rate of the battery, the expansion ratio of the coating material at a high temperature is reduced, but the cycle performance begins to increase, which is also based on the better stabilization effect of Ti on the surface of the lithium cobalt oxide.

2.3 Discussion on the effect of sintering temperature on material properties during preparing of precursor $CoO_x(OH)_y(CO_3)_zMO_n$,

The sintering temperature is also an important indicator of material properties. The present application researches the sintering temperatures during the preparation of the precursor of lithium cobalt oxide in Embodiments 4, 8-12, and Comparative Examples 1 and 2.

Referring to Comparative Example 2 and Embodiment 4, it can be known that by sintering the precursor mixture of lithium cobalt oxide, the material properties are improved. Referring to Comparative Example 1 and Embodiments 8-12, when the sintering temperature is relatively low, the performance improvement is not obvious, which is likely due to poor crystallinity of the material. When the temperature is too high, there is a possibility of over-burning, which also reduces the exertion of the capacity and cycle performances of the material. The effect of stabilizing the surface of the lithium cobalt oxide by the coating layer is not exerted, thereby affecting the stability of the material and the safety of the battery. Studies show that the sintering temperature for preparing the precursor of lithium cobalt oxide having a coating layer on the surface is preferably about 400°C to about 800°C, and more preferably about 600°C.

2.4 Discussion on the effects of cobalt sources of different types on material properties

From the experimental results of Comparative Examples 1, 4, 5 and Embodiments 10, 13, and 14, it can be known that the surface coating has a similar effect on the precursor of lithium cobalt oxide formed by different types of cobalt sources. The introduction of the coating elements has the improvement of different degrees on the safety performance of the lithium cobalt oxide material. The improvement mechanism of the lithium cobalt oxide by different materials is basically the same, but the improvement effect may be slightly different due to the factors such as the conductivity per se and structural stability. However, the technical route of coating the metal elements on the surface of the precursor particles of lithium cobalt oxide still has a positive significance for greatly improving the structural stability of the material and the safety performance of the battery.

2.5 Discussion on the effect of two-element coating of different types on material properties

It can be seen from the experimental results of Comparative Example 1 and Embodiments 4 and 15-17 that the two-element coating of different types has a significant improvement on the performances of the precursor of lithium cobalt oxide and the composite of lithium cobalt oxide formed by the precursor, which may be on the basis that a plurality of coating elements form certain synergistic advantage and improve the characteristics of the precursor and lithium cobalt oxide compound together, and a relatively high use value is realized.

Moreover, it can be seen from the elemental distribution diagrams of FIGS. 1 and 2 and the SEM image of FIG. 3 that the two-element coating obtained by the technical solution of the present application is uniform, thereby overcoming the problem of selective coating in the prior art.

The above are the embodiments listed in the present application. However, other equivalent embodiments made based on the teachings of the present application are intended to be within the scope of the present application since the applicants cannot list all embodiments.

Compared with the prior art, the present application has at least the following beneficial technical effects: the present application adopts the solid phase synthesis method to coat the metal oxides on the surface of the precursor of lithium cobalt oxide, so that the coating is more uniform and the coating layer can stably exist. The stable coating interface is formed in the subsequent multiple sintering processes, which makes the material structure more stable and the electrical performances more excellent. Meanwhile, the cathode material of lithium cobalt oxide prepared from the precursor as the cathode active material can effectively improve the structural stability of the material in a high voltage charging and discharging environment, and improve the cycle performance, high temperature performance and safety performance of the lithium ion battery. In addition, the preparing method involved in the present application is simple, easy to operate and control, and relatively low in cost, and is suitable for industrial production.

In summary, the present application provides a simple and easy method suitable for industrial production to prepare the precursor of the cathode material of lithium cobalt oxide having a surface coating structure, and the cathode material of lithium cobalt oxide prepared from such precursors that are stable in particle structure, and which can effectively improve the cycle performance, high temperature performance and safety performance of the lithium ion battery.

The above explanation briefly summarizes the features of several embodiments, which enable those of ordinary skilled in the art to further understand the various aspects of the present application. Those skilled in the art can readily use the present application as a basis for designing or modifying other compositions to achieve the same objectives and/or the same advantages as the embodiments of the present application. It also can be understood by those of ordinary skilled in the art that these equivalent instances do not depart from the spirit and scope of the present application, and various alternations, substitutions and modifications can be made to the present application without departing from the spirit and scope of the present application. Although the method disclosed herein has been described with reference to the specific operations performed in a specific order, it is understood that these operations can be combined, subdivided or re-sequenced to form equivalent methods without departing from the teachings of the present application. Therefore, unless specifically indicated herein, the order and grouping of the operations do not limit the present application.

**Claims**

1. A precursor of lithium cobalt oxide, comprising a substrate material and a coating layer,
   wherein the general formula of the substrate material is represented as $CoO_x(OH)_y(CO_3)_z$,
   wherein the coating layer is located on the surface of the substrate material, the coating layer contains a metal oxide, and the general formula of the metal oxide is represented as $MO_n$, wherein $0<x<1.5$, $0\leq y<2$, $0<z<1$, $0<n<2.5$.

2. The precursor of lithium cobalt oxide according to claim 1, wherein the mass fraction of the metal oxide is 0.01% to 5% based on the total mass of the precursor of lithium cobalt oxide.

3. The precursor of lithium cobalt oxide according to claim 1 or 2, wherein the mass fraction of the metal oxide is 1% to 3%.

4. The precursor of lithium cobalt oxide according to any one of claims 1-3, wherein M comprises at least one selected from the group consisting of Al, Mg, Ti, Zr, Ni, Mn, Y, Nb, La, V, Zn, Mo, Ru, Ta, W, Re, Sn, Ge, or Ga.

5. The precursor of lithium cobalt oxide according to any one of claims 1-4, wherein M comprises at least one selected from the group consisting of Ti, Zr, Ni, Mn, Y, La, Zn, Ru, or Ge.

6. The precursor of lithium cobalt oxide according to any one of claims 1-5, wherein the thickness of the coating layer is 50 nm to 1 $\mu$m.

7. The precursor of lithium cobalt oxide according to any one of claims 1-6, wherein the substrate material comprises at least one selected from the group consisting of cobaltous oxide, cobaltic oxide, cobaltosic oxide, cobaltous hydroxide, cobalt oxyhydroxide, or cobalt carbonate.

8. The precursor of lithium cobalt oxide according to any one of claims 1-7, wherein the particle diameter of the metal oxide is 10 to 120 nm.

9. The precursor of lithium cobalt oxide according to any one of claims 1-8, wherein a median diameter Dv50 of the lithium cobalt oxide precursor is 5 $\mu$m to 50 $\mu$m.

10. A composite of lithium cobalt oxide, prepared from the precursor of lithium cobalt oxide according to any one of claims 1-9.

11. The composite of lithium cobalt oxide according to claim 10, wherein a median diameter Dv50 of the lithium cobalt oxide compound is 7 $\mu$m to 50 $\mu$m.

12. The composite of lithium cobalt oxide according to claim 10 or 11, wherein an interface solid solution structure is formed on the contact interface between the metal oxide and the substrate material.

13. An electrochemical device, comprising a cathode, an anode, an separator, and an electrolytic solution, wherein the cathode comprises the composite of lithium cobalt oxide according to any one of claims 10-12.

14. The electrochemical device according to claim 13, wherein a compaction density of the positive electrode is 4.25 g/cm$^3$ to 4.35 g/cm$^3$.

15. A method for preparing a precursor of lithium cobalt oxide, comprising the following steps of:

mixing and then grinding a substrate material, a metal oxide or a metal salt, and a liquid organic solvent; and sintering the ground product in an air atmosphere to obtain a precursor of lithium cobalt oxide having a coating layer of the metal oxide on the surface.

Co Ka1

Mn Ka1

Ni Ka1

FIG. 1

Electronic image 1        Mn Ka1        Ni Ka1

# FIG. 2

FIG. 3

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 340 348 A1 (LG CHEMICAL LTD [KR]) 27 June 2018 (2018-06-27) | 1,2,4,5 | INV. C01G51/04 |
| Y | * example all * & WO 2018/004250 A1 (LG CHEMICAL LTD [KR]) 4 January 2018 (2018-01-04) ----- | 1-15 | |
| X | KR 2013 0005885 A (LG CHEMICAL LTD [KR]) 16 January 2013 (2013-01-16) | 1,2,4,5 | |
| Y | * example all * ----- | 1-15 | |
| X | CN 106 784 739 A (HUNAN RESHINE NEW MAT CO LTD) 31 May 2017 (2017-05-31) | 1,2,4,5 | |
| Y | * example all * ----- | 1-15 | |

TECHNICAL FIELDS
SEARCHED (IPC)

C01G

The present search report has been drawn up for all claims

| Place of search | Date of completion of the search | Examiner |
|---|---|---|
| Munich | 29 May 2020 | Timmermans, Michel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 15 2221

This annex lists the patent family members relating to the patent documents cited in the above-mentioned European search report.
The members are as contained in the European Patent Office EDP file on
The European Patent Office is in no way liable for these particulars which are merely given for the purpose of information.

29-05-2020

| Patent document cited in search report | | Publication date | Patent family member(s) | | Publication date |
|---|---|---|---|---|---|
| EP 3340348 | A1 | 27-06-2018 | CN 108140821 A<br>EP 3340348 A1<br>KR 20180002055 A<br>US 2018309123 A1 | | 08-06-2018<br>27-06-2018<br>05-01-2018<br>25-10-2018 |
| KR 20130005885 | A | 16-01-2013 | NONE | | |
| CN 106784739 | A | 31-05-2017 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910039655